(19) Europäisches Patentamt
European Patent Office
Office européen des brevets

(11) **EP 2 428 771 B1**

(12) **FASCICULE DE BREVET EUROPEEN**

(45) Date de publication et mention
de la délivrance du brevet:
**13.01.2016 Bulletin 2016/02**

(51) Int Cl.:
***G01C 21/34*** *(2006.01)* ***G01C 21/20*** *(2006.01)*

(21) Numéro de dépôt: **11180822.6**

(22) Date de dépôt: **09.09.2011**

(54) **Procédé de recherche de plus court chemin avec heuristique**

Heuristisches Verfahren zum Finden des kürzesten Weges in einer Punkt-zu-Punkt Pfadplanung

Heuristic process for finding the shortest path between two points

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.09.2010 FR 1003631**

(43) Date de publication de la demande:
**14.03.2012 Bulletin 2012/11**

(73) Titulaire: **Thales
92200 Neuilly Sur Seine (FR)**

(72) Inventeurs:
• **Heurguier, Dominique
92700 Colombes (FR)**
• **Poilleux, Jean-Yves
92700 Colombes (FR)**
• **Chocardelles, Thomas
92700 Colombes (FR)**

(74) Mandataire: **Esselin, Sophie et al
Marks & Clerk France
Conseils en Propriété Industrielle
Immeuble Visium
22, Avenue Aristide Briand
94117 Arcueil Cedex (FR)**

(56) Documents cités:
**WO-A2-2006/080996**

**Description**

L'invention concerne un procédé de recherche de plus court chemin avec heuristique. Elle s'applique notamment aux domaines de la planification d'itinéraire tout terrain dans un environnement complexe.

L'expression *environnement complexe* désigne dans la description, un environnement comprenant de nombreux obstacles ou zones de non-franchissement. Ces obstacles correspondent par exemple à des éléments de relief comme des montagnes ou des crevasses, des éléments hydrographiques comme des lacs ou des rivières ou tout éléments rendant difficile le passage du véhicule pour lequel un itinéraire doit être planifié.

L'expression *tout terrain* est utilisée afin d'indiquer que le procédé selon l'invention est applicable pour la planification d'itinéraire sur route, hors route ou mixte.

Afin de déterminer un itinéraire pour le déplacement de véhicules ou d'individus, le terrain est habituellement représenté sous forme d'un graphe de déplacements élémentaires. Un tel graphe correspond par exemple à un maillage et est composé de noeuds appelés aussi sommets. Un itinéraire peut être déterminé en appliquant un procédé de recherche de chemin par exploration dudit graphe. Un graphe est habituellement mis en oeuvre en deux dimensions et prend en compte la traficabilité et le type de terrain rencontré. A titre d'exemple, à une maille du graphe peuvent être associées des données indiquant si la portion de terrain correspondante est franchissable ainsi que la vitesse à laquelle elle peut être franchie.

Les procédés d'exploration de graphe existant permettent de résoudre la problématique de recherche de plus court chemin entre un noeud de départ et un noeud d'arrivée. L'algorithme A*, appelé aussi A-star, en est un exemple connu et est considéré comme particulièrement efficace pour résoudre ce problème. Cet algorithme est décrit notamment dans l'article de P.E. Haart, N.J. Nilsson et B. Raphale intitulé A Formal Basis for the Heuristic Determination of Minimum Cost Paths, IEEE transactions of Systems Science and Cybernetics, Vol. 4, n°2, pages 100-107, Juillet 1968. L'algorithme A* utilise une fonction de coût pour sélectionner les noeuds composant l'itinéraire. Cette fonction de coût peut se décomposer en deux sous-fonctions. La première sous-fonction est une fonction d'évaluation du coût du chemin parcouru pour aller du noeud de départ au noeud courant et correspond à la somme des valuations des arcs composant le plus court chemin connu. La deuxième sous-fonction est une fonction d'estimation du coût du plus court chemin allant du noeud courant au noeud d'arrivée. Cette seconde fonction est également nommée fonction heuristique. Une fonction heuristique correspond à un procédé sous optimal permettant de s'approcher d'une solution optimale. Il est par ailleurs démontré que si cette fonction * heuristique est un minorant du coût réel du plus court chemin, alors l'algorithme A trouve une solution optimale de plus court chemin s'il en existe une.

Dans le cadre de la recherche d'un plus court itinéraire tout terrain ou mixte, la fonction heuristique utilisée est habituellement la distance euclidienne entre le noeud courant et le noeud d'arrivée.

La fonction heuristique basée sur la distance euclidienne conduit à des temps de calculs prohibitifs lorsqu'elle est appliquée à de grands terrains complexes. En effet, cette heuristique ne prend pas en compte les informations macroscopiques disponibles sur le terrain telles que les obstacles ou les lignes non franchissables. Ainsi, par exemple lors de l'exploration d'un graphe maillé, le contournement d'un obstacle peut se traduire par une exploration d'un grand nombre de noeuds du graphe, ce qui entraîne un nombre de calculs très important. Le document WO 2006/08996 décrit un tel procédé de recherche de plus court chemin en présence d'obstacles. Dans des environnements complexes, c'est-à-dire présentant de nombreux obstacles entre le noeud de départ et le noeud d'arrivée, la combinatoire d'exploration augmente très fortement. La mise en oeuvre d'une recherche de trajet optimal devient alors très coûteuse en temps de calcul.

Afin de réduire le temps de calcul, certains procédés utilisent parfois une fonction heuristique ne minorant pas le coût du plus court chemin allant du noeud courant au noeud d'arrivée. Ceci conduit à une réduction du temps de calcul mais cela ne garanti pas l'obtention d'un plus court chemin, la méthode étant alors sous-optimale.

Un but de l'invention est notamment de pallier les inconvénients précités.

A cet effet l'invention a pour objet un procédé de recherche de plus court chemin entre un noeud courant C et un noeud d'arrivée A appartenant à un graphe de déplacements élémentaires, selon la revendication annexée 1. Le procédé comporte au moins les étapes suivantes : un test (201) vérifiant si le noeud C est en visibilité directe avec le noeud A ou si des obstacles s'y opposent ; la détermination de points de contournement des obstacles empêchant la visibilité directe (202) et la sélection d'au moins un de ces points ; la recherche du chemin heuristique (203) entre le noeud C et le point de contournement sélectionné puis entre le point de contournement C et le noeud A.

Selon un aspect de l'invention, les obstacles sont représentés par leurs enveloppes convexes, lesdites enveloppes étant définies par les noeuds $C_i$ correspondant aux extrémités des segments composant les enveloppes.

Selon un autre aspect de l'invention, un obstacle est considéré comme empêchant une visibilité directe entre les points C et A si ledit obstacle intersecte le segment défini par ces deux noeuds.

Les points de contournement sont choisis parmi les noeuds $C_i$ de l'enveloppe convexe en fonction, par exemple, de la valeur des angles $\theta_i = (CA, CC_i)$ formés par les segments [CA] (402) et $[CC_i]$.

Un point de contournement $C_m$ peut être déterminé de manière à ce que l'angle $\theta_m = (CA, CC_m)$ soit négatif

et maximal en valeur absolue parmi l'ensemble des angles $\theta i$ négatifs possibles.

Un point de contournement Cn est déterminé, par exemple, de manière à ce que la valeur de l'angle $\theta n$ = (CA, CCn) soit positive et maximale en valeur absolue parmi l'ensemble des angles $\theta i$ positifs possibles.

Dans un mode de réalisation, l'heuristique est mise en oeuvre en se basant sur la détermination de la longueur L du plus court chemin déterminée en utilisant l'expression suivante :

$$L = \min(d(C,Cm)+d(Cm,A),\ d(C,Cn)+d(Cn,A))$$

dans laquelle :

min(x,y) représente une fonction dont le résultat est le minimum entre deux nombres réels positifs x et y ;
d(E,F) représente la distance euclidienne entre deux points E et F.

Alternativement, l'heuristique peut être mise en oeuvre en se basant sur la détermination de la longueur L du plus court chemin déterminée en utilisant l'expression suivante :

$$L = \min\{d(C,Cm)+d(Cm,A),\ d(C,Cn)+d(Cn,A)\}/Vmax$$

dans laquelle :

Vmax représente pour un type de véhicule désigné la vitesse maximale à laquelle celui-ci est susceptible de se déplacer, en considérant la totalité du terrain sur lequel est effectué la planification d'itinéraire.

Selon un aspect de l'invention, un point de contournement est sélectionné parmi Cn et Cm de manière à minimiser la longueur L.

L'invention prévoit avantageusement que la détermination des enveloppes convexes des obstacles est réalisée préalablement à l'exécution du procédé ou pendant le test de détection d'obstacle.

Dans un mode de mise en oeuvre, lorsqu'il n'y pas d'obstacle à contourner l'estimation du chemin entre C et A emploie une heuristique se basant sur la distance euclidienne d(C,A).

Si plusieurs obstacles ont été détectés lors du test d'intervisibilité, la détermination des points de contournement est effectuée, par exemple, en sélectionnant un unique obstacle.

Alternativement, selon une variante de réalisation, si plusieurs obstacles ont été détectés lors du test d'intervisibilité, la détermination des points de contournement est effectuée en sélectionnant successivement plusieurs obstacles.

Selon un aspect de l'invention, un obstacle est sélectionné parmi les obstacles intersectant si son enveloppe convexe présente le plus grand angle d'ouverture, l'angle d'ouverture correspondant à l'angle réalisé par les deux segments reliant le point courant C aux deux points de contournement appartenant à l'enveloppe convexe de chaque obstacle.

Alternativement, selon une variante de réalisation, un obstacle est sélectionné parmi les obstacles intersectant si son enveloppe convexe est la plus proche du point courant C.

Alternativement, selon une variante de réalisation, un obstacle est sélectionné parmi les obstacles intersectant si la surface de son enveloppe convexe est la plus grande.

Dans un mode de mise en oeuvre, le procédé comprend une étape déterminant des chemins heuristiques possibles contournant les enveloppes convexes des obstacles de la zone à explorer puis sélectionnant celui présentant la plus courte distance entre le noeud courant C et le noeud de destination A.

L'invention concerne également un dispositif de navigation mettant en oeuvre le procédé décrit précédemment.

D'autres caractéristiques et avantages de l'invention apparaîtront à l'aide de la description qui suit donnée à titre illustratif et non limitatif, faite en regard des dessins annexés parmi lesquels :

- la figure 1 illustre le comportement de l'algorithme A* dans un environnement comportant plusieurs obstacles ;
- la figure 2 présente un diagramme simplifié du procédé selon l'invention ;
- la figure 3 donne un exemple de modélisation d'obstacle par enveloppe convexe;
- la figure 4 illustre une manière de déterminer un point de contournement d'un obstacle ;
- les figures 5a, 5b, 5c illustrent le déroulement des étapes du procédé à l'ordre 1 sur un exemple d'environnement comportant deux obstacles ;

- la figure 6 illustre sur un exemple une méthode de sélection d'obstacle d'ordre 1 avec un critère de sélection de l'obstacle le plus grand.
- la figure 7 donne un exemple de méthode de sélection d'obstacle d'ordre N.

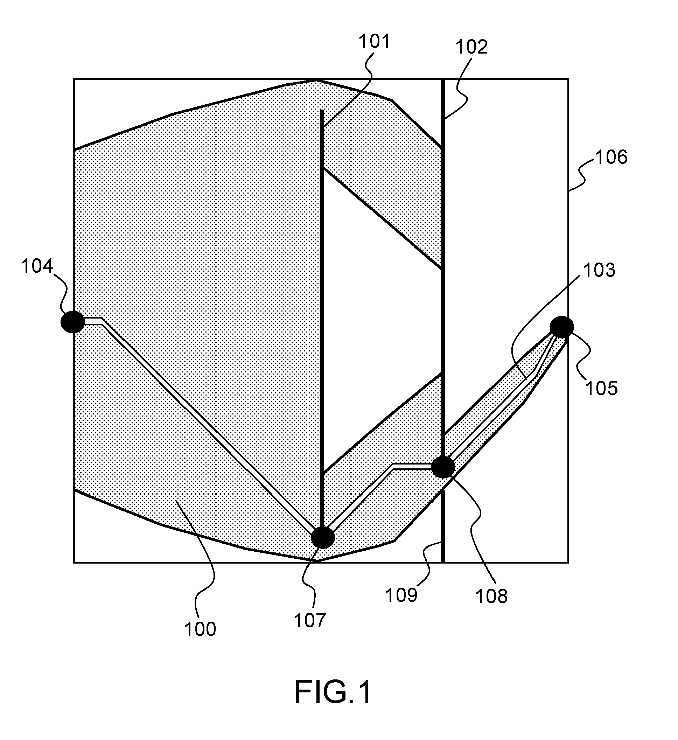

La figure 1 illustre le comportement de l'algorithme A* dans un environnement comportant plusieurs obstacles. Dans cet exemple, l'algorithme est appliqué afin de trouver le meilleur chemin entre un noeud de départ 104 et un noeud d'arrivée 105. L'environnement est modélisé à l'aide d'un graphe 106 dont les noeuds et les arcs ne sont pas représentés. Trois obstacles 101, 102, 109 correspondant par exemples à des murs, sont présents dans l'environnement de déplacement. Un chemin 103 est choisi par l'algorithme A* de manière à ce que lesdits obstacles soient contournés en empruntant des points de contournement 107, 108. L'ensemble des noeuds explorés et ayant été considérés comme candidats pour le chemin retenu 103 est indiqué sur la figure à l'aide d'une zone grisée 100. Il apparaît en particulier qu'en amont et en aval du premier obstacle 101, un nombre important de noeuds candidats a été analysé. Les algorithmes de l'état de la technique ne sont pas optimisés pour trouver rapidement le meilleur chemin dans des environnements complexes. Dans cet exemple, le nombre important de noeud testés par l'algorithme requière de nombreux calculs et a pour conséquence une augmentation du temps de traitement très significative en comparaison d'environnements moins complexes. Le procédé selon l'invention exposé ci-après a pour objectif d'analyser l'environnement pour déterminer au préalable les points de contournement permettant de contourner les obstacles, et ce afin de faciliter le travail de l'algorithme de recherche de chemin et ainsi réduire la complexité de calcul. Les points de contournement ne seront pas tous empruntés par le chemin résultat de l'algorithme mais guident celui-ci dans la recherche du meilleur chemin.

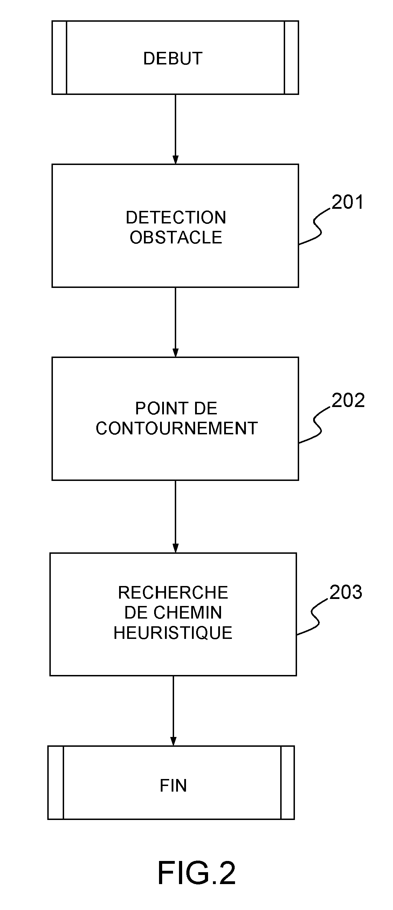

La figure 2 présente un diagramme simplifié du procédé selon l'invention. Le procédé de recherche de chemin prend avantageusement en compte une connaissance macroscopique des zones non franchissables dans la fonction heuristique. Il en résulte notamment une forte réduction du nombre de noeuds explorés par un algorithme de recherche de chemin classique comme par exemple l'algorithme A* classique.

L'invention repose sur la définition et l'utilisation d'une fonction heuristique qui évalue le coût d'un plus court chemin du noeud courant au noeud d'arrivée en contournant les obstacles situés entre ces deux noeuds si nécessaire. Grâce à une exploration efficace de graphe modélisant l'environnement de déplacement, le procédé selon l'invention réduit significativement la combinatoire d'exploration en limitant le nombre de noeuds explorés du graphe pour le calcul d'un plus court chemin.

Le diagramme simplifié de la figure 2 présente les étapes principales du procédé selon l'invention. L'invention utilise les informations décrivant des obstacles non franchissables afin de diriger l'algorithme A* à rechercher des chemins qui contournent ces obstacles et ces zones non franchissables pour trouver un chemin optimal. Ceci permet de réduire la zone d'exploration et donc le nombre de noeuds explorés.

Une première étape 201 a pour objectif de détecter quels sont les obstacles à prendre en compte pour la détermination du meilleur chemin. Pour cela, un test d'intervisibilité est appliqué afin de déterminer si le noeud courant est en visibilité directe avec le noeud d'arrivée ou bien si au moins un obstacle se situe entre ces deux points. Une seconde étape 202 détermine un ou plusieurs points de contournement de cet obstacle. Une troisième étape 203 correspond à la recherche du plus court chemin heuristique de contournement et à l'évaluation de la fonction heuristique (longueur du plus court chemin heuristique de contournement), les points de contournement détectés lors de la seconde étape étant utilisés afin de simplifier les calculs. Cette estimation du plus court chemin est appelée dans la suite de la description chemin heuristique et désigne une estimation du plus court chemin restant à parcourir entre le noeud courant et le noeud d'arrivée.

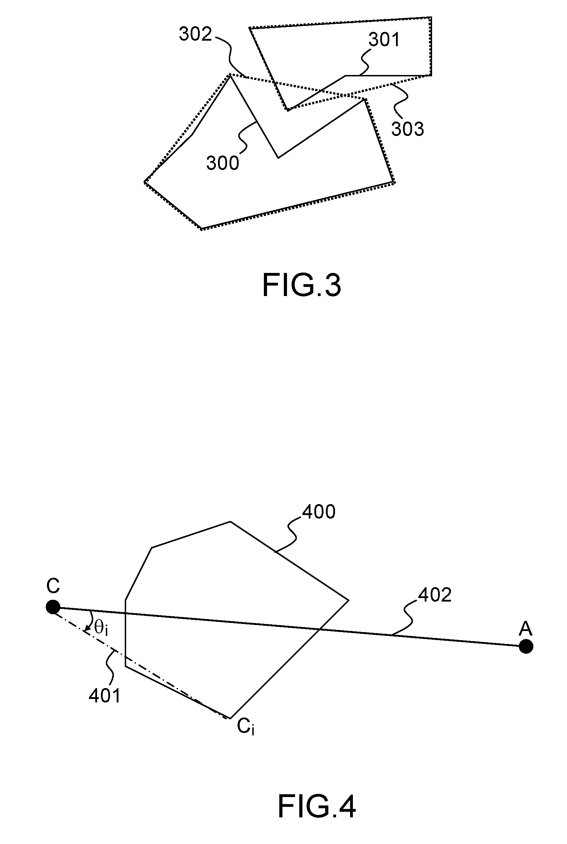

La figure 3 donne un exemple de modélisation d'obstacle par une enveloppe convexe. Afin de mener à bien l'étape de détection d'obstacles 201 mentionnée précédemment, ces derniers sont par exemple modélisés à l'aide d'enveloppes convexes. Ce type de modélisation permet de simplifier et d'optimiser les traitements réalisés par les étapes ultérieures. Cela ne perturbe pas le comportement de l'algorithme de recherche de chemin et permet de réduire le nombre de sommets des polygones, dès lors que les points courants ou le point d'arrivé ne sont pas situés à l'intérieur de l'enveloppe convexe. En effet, les obstacles sont habituellement représentés dans les graphes sous forme de polygones ou de lignes polygonales. Dans ce cas, l'enveloppe convexe d'un obstacle est le plus petit polygone convexe le contenant. On rappelle qu'un polygone est dit convexe si toutes ses diagonales sont entièrement à l'intérieur de la surface délimitée par ledit polygone. De plus, une diagonale d'un polygone est un segment qui joint deux noeuds non consécutifs, c'est-à-dire un segment qui joint deux noeuds et qui n'est pas un côté du polygone. La figure 3 donne l'exemple de deux obstacles modélisés sous forme de polygones 300, 301 ainsi que leurs enveloppes convexes respectives 302, 303.

La figure 4 illustre une manière de déterminer un point de contournement d'un obstacle.

Comme explicité précédemment, une enveloppe convexe est déterminée pour chaque obstacle. Une enveloppe convexe comprend un nombre fini S de noeuds. Le $i$-ème noeud est noté $C_i$ avec $i \in [1, S]$. Ainsi, une enveloppe convexe est caractérisée par les noeuds $C_i$ des segments la constituant. L'enveloppe convexe 400 de la figure comprend S=6 noeuds. Le point C représente le noeud courant et le point A le noeud d'arrivée. Afin de déterminer le point de contournement, l'angle θi formé par les segments [CA] 402 et [CCi] 401 est déterminé. Dans la suite de la description, on note θi = (CA, CCi) valué dans le sens trigonométrique.

Les deux noeuds fermant l'angle solide défini par l'obstacle sont retenus. C'est-à-dire que deux noeuds Cm et Cn sont retenus, ces noeuds étant définis de la manière suivante :

- Cm tel que l'angle θm = (CA, CCm) est négatif et maximal en valeur absolue parmi l'ensemble des angles θi négatifs possibles ;
- Cn tel que l'angle θn = (CA, CCn) soit positif et maximal en valeur absolue parmi l'ensemble des angles θi positifs possibles.

La longueur estimée du plus court chemin entre les points C et A permet de sélectionner le point de contournement à retenir pour une mise en oeuvre d'une heuristique visant à déterminer l'itinéraire à emprunter. Si un critère ayant pour but de minimiser la distance parcourue est choisi, l'expression (1) peut être utilisée pour déterminer la longueur du plus court chemin L à considérer par l'heuristique. Cette expression permet également de sélectionner le point de contournement à retenir parmi Cn et Cm, le point retenu étant celui permettant de minimiser l'expression suivante :

$$L = \min(d(C,Cm)+d(Cm,A), d(C,Cn)+d(Cn,A)) \qquad (1)$$

dans laquelle :

min(x,y) représente une fonction dont le résultat est le minimum entre deux nombres réels positifs x et y ;
d(E,F) représente la distance euclidienne entre deux points E et F.

Si un critère ayant pour objectif de minimiser la durée de trajet est choisi, la longueur L de plus court chemin peut être déterminée en utilisant l'expression :

$$L = \min\{d(C,Cm)+d(Cm,A), d(C,Cn)+d(Cn,A)\}/Vmax \qquad (2)$$

dans laquelle :

Vmax représente pour un type de véhicule désigné, la vitesse maximale à laquelle celui-ci est susceptible de se déplacer, en considérant la totalité du terrain sur lequel est effectué la planification d'itinéraire.

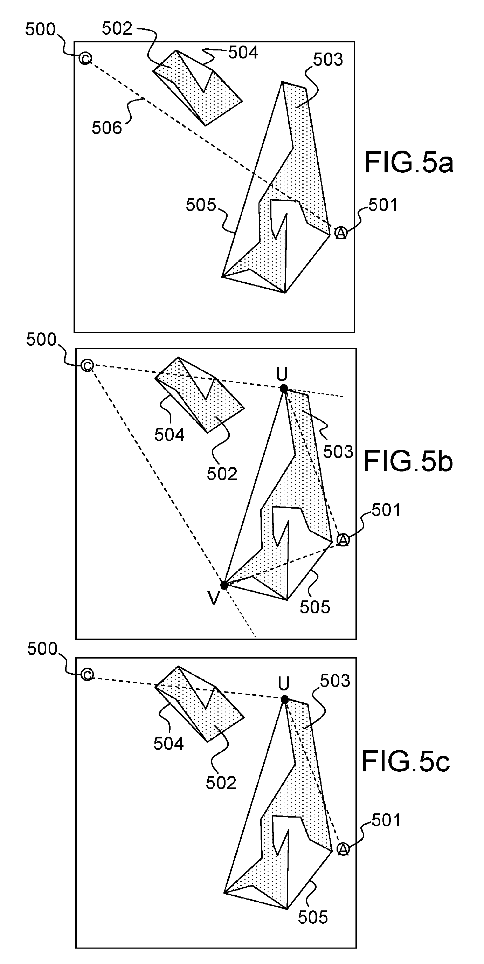

Les figures 5a, 5b, 5c illustrent le déroulement des étapes du procédé sur un exemple d'environnement comportant deux obstacles.
Le procédé selon l'invention utilise comme paramètres d'entrées les coordonnées géographiques du noeud courant 500, les coordonnées géographiques du noeud d'arrivée 501 ainsi que les coordonnées des noeuds des enveloppes convexes 504, 505 associées aux obstacles 502, 503. Le graphe de l'exemple, dont les arcs et les sommets ne sont pas représentés, des figures 5a, 5b et 5c comprend deux obstacles 502, 503.
Les obstacles sont définis par des polygones ou par des lignes polygonales aussi appelées polylignes. Les enveloppes convexes 504, 505 de ces obstacles sont, par exemple, déterminées au préalable c'est-à-dire avant l'exécution des étapes du procédé. Dans une mise en oeuvre alternative, la détermination des enveloppes convexes peut être effectuée durant l'exécution du procédé, par exemple durant l'étape de détection d'obstacle 201, afin de tenir compte notamment d'obstacles en mouvement.
La détermination de la fonction heuristique au noeud courant 500 produit une évaluation du plus court chemin du point courant C 500 au point d'arrivée A 501.
L'étape de test d'intervisibilité 201 applique, par exemple, une fonction de calcul de distance d(C,A) entre les deux points C et A. On dit que les deux points C et A sont en intervisibilité directe si le segment [C,A] n'intersecte aucun obstacle.
A titre d'exemple, trois cas peuvent être considérés durant l'étape du test d'intervisibilité :

- cas 1 : si le point C est situé dans l'enveloppe convexe d'un obstacle, la distance d(C,A) est déterminée et l'étape 203 de recherche de chemin est appliquée directement ;
- cas 2 : si le point C est en visibilité directe avec le point A, la distance d(C,A) est déterminée et l'étape 203 de recherche de chemin heuristique est appliquée directement car il n'est pas nécessaire de trouver des points de contournement ;
- cas 3 : si le point C n'est pas en intervisibilité directe avec le point A, le procédé applique l'étape 202 de recherche de points de contournement.

Dans le troisième cas, l'étape 202 de recherche de points de contournement vise à déterminer deux points U et V tangents à l'enveloppe convexe de l'obstacle le plus proche du point C et qui est en intersection avec le segment [C,A] 506. Pour ce qui est de l'exemple de la figure 5a, le résultat du test d'intervisibilité est qu'un obstacle 503 intersecte le segment [CA] 506.

Deux points de contournement U et V sont alors choisis comme illustré par la figure 5b. Les distances cumulées d1 et d2 leurs étant associées sont calculées en utilisant les expressions suivantes :

$$d1 = d(C,U) + d(U,A) \qquad (3)$$

$$d2 = d(C,V) + d(V,A) \qquad (4)$$

Le point de contournement présentant la distance cumulée minimum est ensuite sélectionné. La figure 5c montre que dans l'exemple, c'est le point U qui est retenu car d1 < d2.

S'il n'y a pas d'obstacle (cas 2), l'estimation du chemin entre C et A est basée sur une heuristique habituellement utilisée, c'est-à-dire la distance euclidienne d(C,A) de C à A lorsqu'un critère de distance minimale est choisi ou bien d(C,A)/Vmax lorsqu'un critère de durée de trajet minimale est choisi.

Si au moins un obstacle est détecté comme dans l'exemple de la figure 5c, l'estimation du chemin entre C et le point de contournement retenu U est basée sur une heuristique habituellement utilisé, c'est-à-dire la distance euclidienne d(C,U) de C à U lorsqu'un critère de distance minimal est choisi ou bien d(C,U)/Vmax lorsqu'un critère de durée de trajet minimale est choisi.

Si plusieurs obstacles ont été détectés, lors du test d'intervisibilité, la détermination des points de contournement peut être effectuée de différentes manières. Une première famille de méthodes dites méthodes d'ordre 1 ne tiennent compte que d'un obstacle, même si plusieurs obstacles intersectent le segment [C, A]. Il est alors possible de traiter par exemple en priorité l'obstacle le plus proche ou bien l'obstacle le plus grand, par exemple au sens de l'angle apparent le plus élevé. Une seconde famille de méthodes dites méthodes d'ordre supérieur prennent en compte plusieurs obstacles intersectant le segment [C, A]. Il s'agit par exemple d'une mise en oeuvre d'une méthode d'ordre 1 par récursivité jusqu'à épuisement des obstacles ou en limitant la récursivité à un nombre d'obstacles donnés ou à un nombre d'itérations donnés.

Pour ce qui est des méthodes de sélection d'ordre 1, un exemple est qu'après la recherche des obstacles intersectant le segment [C,A], une liste d'obstacle est constituée. L'un des obstacles de cette liste est retenu, ce dernier correspondant à l'obstacle le plus proche du noeud courant. Sur la base de cet obstacle, sont déterminées les deux distances d1 et d2 passant par les points de contournement lui étant associés et la distance la plus petite est retenue.

D'autres méthodes de sélection d'ordre 1 peuvent être employées en sélectionnant d'une manière différente l'un des obstacles de la liste d'obstacles intersectant. Ces méthodes permettent ensuite d'optimiser l'étape de recherche de chemin heuristique du procédé. L'obstacle sélectionné peut être celui dont l'enveloppe convexe présente le plus grand angle d'ouverture, l'angle d'ouverture correspondant à l'angle réalisé par les deux segments reliant le point courant C aux deux points de contournement appartenant à l'enveloppe convexe de chaque obstacle.

Il est à noter que lors de la recherche de chemin heuristique 203, les noeuds situés le long des obstacles aux alentours du segment qui relie le noeud courant au noeud d'arrivée voient la valeur de la fonction de coût augmenter car la fonction heuristique de l'invention est plus élevée dans ces zones. Ceci conduit l'algorithme A* à diriger son exploration vers les points de contournement de l'obstacle.

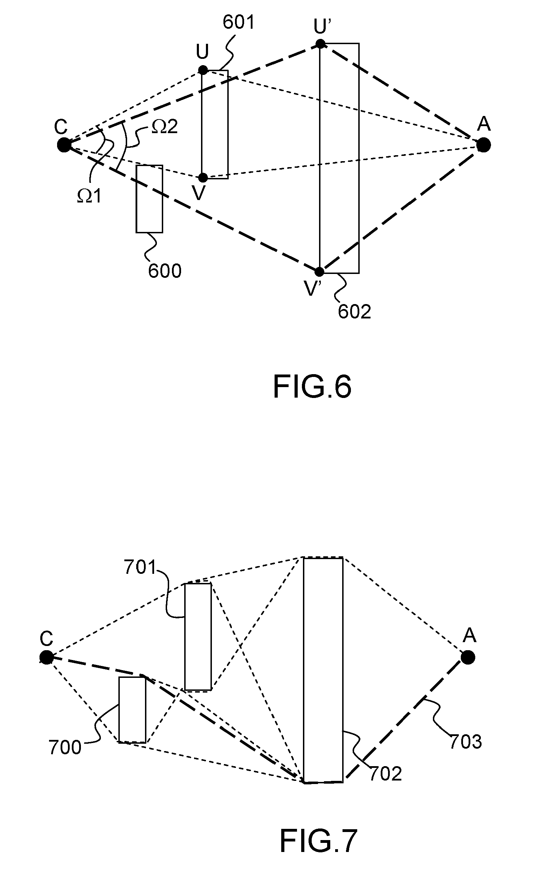

La figure 6 donne un exemple de méthode de sélection d'obstacle d'ordre 1. Trois obstacles 600, 601, 602 sont représentés mais seuls deux d'entre eux 601, 602 intersectent le segment [C,A]. L'un de ces deux obstacles doit donc être sélectionné. Deux points de contournement U, V associés au premier obstacle retenu 601 sont déterminés et permettent de définir un premier angle d'ouverture $\Omega 1 = (CU, CV)$. Pour le second obstacle 602, deux points de contournement U', V' sont également déterminés et permettent de définir un second angle d'ouverture Ω2=(CU', CV'). Si la méthode de sélection a comme critère de sélection l'angle d'ouverture maximal, c'est le second obstacle 602 qui est retenu car Ω2 > Ω1.

Un autre critère peut être utilisé, en se basant par exemple sur le calcul de la distance du contour des enveloppes convexes des obstacles retenus et en retenant l'obstacle auquel est associé la plus grande de ces valeurs.

La figure 7 donne un exemple de méthode de sélection d'obstacle d'ordre supérieur.

Pour ce qui est des méthodes de sélection d'obstacle d'ordre supérieur, il est possible par exemple de déterminer tous les chemins possibles contournant les enveloppes convexes des obstacles de la zone à explorer puis de sélectionner celui présentant la plus courte distance entre le noeud courant C et le noeud de destination A. Dans ce cas, plusieurs obstacles sont pris en compte et plusieurs points de contournement sélectionnés pour la recherche de chemin.

Sur la figure, trois obstacles 700, 701, 702 ont été représentés. Tous les chemins possibles sont ensuite déterminés sous la forme de polylignes en prenant en compte les points de contournement adaptés à chaque chemin. Parmi ces chemins, le chemin de plus courte distance 703 est sélectionné.

**Revendications**

1. Procédé de recherche de plus court chemin pour la planification d'itinéraire entre un noeud courant C et un noeud d'arrivée A appartenant à un graphe de déplacements élémentaires, ledit procédé étant **caractérisé en ce qu'**il comporte au moins les étapes suivantes :

   - un test (201) vérifiant si le noeud C est en visibilité directe avec le noeud A ou si au moins un obstacle (300, 301) s'y oppose ;
   - la détermination d'un ensemble d'au moins un point de contournement dudit obstacle empêchant la visibilité directe (202), ledit obstacle étant représenté par son enveloppe convexe (302, 303), le ou les dits points de contournement étant choisis parmi les noeuds $C_i$ correspondant aux extrémités des segments composant l'enveloppe convexe dudit obstacle en fonction de la valeur des angles $\theta_i = (CA, CC_i)$ formés par les segments [CA] (402) et [$CC_i$] (401), et la sélection d'au moins un point de cet ensemble ;
   - la recherche par application d'une fonction heuristique (203) du plus court chemin entre le noeud C et le point de contournement sélectionné puis entre le point de contournement et le noeud A.

2. Procédé selon la revendication précédente **caractérisé en ce qu'**un obstacle est considéré comme empêchant une visibilité directe entre les points C et A si ledit obstacle intersecte le segment défini par ces deux noeuds.

3. Procédé selon l'une quelconque des revendications précédentes, **caractérisé en ce qu'**un point de contournement $C_m$ est déterminé de manière à ce que l'angle $\theta_m = (CA, CC_m)$ soit négatif et maximal en valeur absolue parmi l'ensemble des angles $\theta_i$ négatifs possibles.

4. Procédé selon l'une quelconque des revendications précédentes, **caractérisé en ce qu'**un point de contournement $C_n$ est déterminé de manière à ce que la valeur de l'angle $\theta_n = (CA, CC_n)$ soit positive et maximale en valeur absolue parmi l'ensemble des angles $\theta_i$ positifs possibles.

5. Procédé selon les revendications 3 et 4, **caractérisé en ce que** l'heuristique (203) est mise en oeuvre en se basant sur la détermination de la longueur L du plus court chemin déterminée en utilisant l'expression suivante :

$$L = \min(d(C,C_m)+d(C_m,A),\ d(C,C_n)+d(C_n,A))$$

   dans laquelle :

   $\min(x,y)$ représente une fonction dont le résultat est le minimum entre deux nombres réels positifs x et y ;
   $d(E,F)$ représente la distance euclidienne entre deux points E et F.

6. Procédé selon les revendications 3 et 4, **caractérisé en ce que** l'heuristique (203) est mise en oeuvre en se basant sur la détermination de la longueur L du plus court chemin déterminée en utilisant l'expression suivante :

$$L = \min\{d(C,Cm)+d(Cm,A),\ d(C,Cn)+d(Cn,A)\}/Vmax$$

dans laquelle :

Vmax représente pour un type de véhicule désigné la vitesse maximale à laquelle celui-ci est susceptible de se déplacer, en considérant la totalité du terrain sur lequel est effectué la planification d'itinéraire.

7. Procédé selon l'un quelconque des revendications 5 ou 6, **caractérisé en ce qu'**un point de contournement est sélectionné (202) parmi Cn et Cm de manière à minimiser la longueur L.

8. Procédé selon l'une quelconque des revendications précédentes, **caractérisé en ce que** la détermination des enveloppes convexes des obstacles est réalisée préalablement à l'exécution du procédé ou pendant le test (201) de détection d'obstacle.

9. Procédé selon l'une des revendications précédentes, **caractérisé en ce que** lorsqu'il n'y pas d'obstacle à contourner l'estimation du chemin entre C et A emploie une heuristique se basant sur la distance euclidienne d(C,A).

10. Procédé selon l'une quelconque des revendications précédentes, **caractérisé en ce que** si plusieurs obstacles ont été détectés lors du test d'intervisibilité (201), la détermination des points de contournement est effectuée en sélectionnant un unique obstacle.

11. Procédé selon l'une quelconque des revendications précédentes, **caractérisé en ce que** si plusieurs obstacles ont été détectés lors du test d'intervisibilité (201), la détermination des points de contournement est effectuée en sélectionnant successivement plusieurs obstacles.

12. Procédé selon l'une quelconque des revendications 10 ou 11, **caractérisé en ce qu'**un obstacle est sélectionné parmi les obstacles intersectant si son enveloppe convexe présente le plus grand angle d'ouverture, l'angle d'ouverture correspondant à l'angle réalisé par les deux segments reliant le point courant C aux deux points de contournement appartenant à l'enveloppe convexe de chaque obstacle.

13. Procédé selon l'une quelconque des revendications 10 ou 11, **caractérisé en ce qu'**un obstacle est sélectionné parmi les obstacles intersectant si son enveloppe convexe est la plus proche du point courant C.

14. Procédé selon l'une quelconque des revendications 10 ou 11 **caractérisé en ce qu'**un obstacle est sélectionné parmi les obstacles intersectant si la surface de son enveloppe convexe est la plus grande.

15. Procédé selon l'une quelconque des revendications précédentes, **caractérisé en ce qu'**il comprend une étape déterminant des chemins heuristiques possibles contournant les enveloppes convexes des obstacles de la zone à explorer puis sélectionnant celui présentant la plus courte distance entre le noeud courant C et le noeud de destination A.

16. Dispositif de navigation **caractérisé en ce qu'**il met en oeuvre le procédé selon l'une quelconque des revendications précédentes.

**Patentansprüche**

1. Suchverfahren für den kürzesten Weg für die Planung einer Strecke zwischen einem laufenden Knoten C und einem Ankunftsknoten A, die zu einer Kurve elementarer Verlagerungen gehören, wobei das Verfahren **dadurch gekennzeichnet ist, dass** es mindestens die folgenden Schritte umfasst:

einen Test (201), der überprüft, ob der Knoten C in direkter Sichtbarkeit mit dem Knoten A ist oder ob das mindestens von einem Hindernis (300, 301) verhindert wird,
das Bestimmen einer Gruppe von mindestens einem Umgehungspunkt des Hindernisses, das die direkte Sichtbarkeit (202) verhindert, wobei das Hindernis anhand seiner konvexen Hülle (302, 303) dargestellt ist, wobei der oder die Umgehungspunkte aus den Knoten Ci, die den Enden der Segmente entsprechen, die die konvexe Hülle des Hindernisses in Abhängigkeit von dem Wert der Winkel θi = (CA, CCi), die von den Segmenten [CA] (402) und [CCi] (401) gebildet werden, bilden, und der Auswahl von mindestens einem Punkt aus dieser Gruppe, ausgewählt sind,

das Suchen durch Anwenden einer heuristischen Funktion (203) nach dem kürzesten Weg zwischen dem Knoten C und dem ausgewählten Umgehungspunkt, dann zwischen dem Umgehungspunkt und dem Knoten A.

2. Verfahren nach vorangehendem Anspruch, **dadurch gekennzeichnet, dass** ein Hindernis als eine direkte Sichtbarkeit zwischen den Punkten C und A verhindernd betrachtet wird, wenn das Hindernis das von diesen beiden Knoten festgelegte Segment schneidet.

3. Verfahren nach einem der vorangehenden Ansprüche, **dadurch gekennzeichnet, dass** ein Umgehungspunkt Cm derart bestimmt wird, dass der Winkel θm = (CA, CCm) negativ und maximal in absolutem Wert aus der Gruppe der möglichen negativen Winkel θi ist.

4. Verfahren nach einem der vorangehenden Ansprüche, **dadurch gekennzeichnet, dass** ein Umgehungspunkt Cn derart bestimmt wird, dass der Wert des Winkels θn = (CA, CCn) positiv und maximal in absolutem Wert aus der Gruppe der möglichen positiven Winkel θi ist.

5. Verfahren nach den Ansprüchen 3 und 4, **dadurch gekennzeichnet, dass** die Heuristik (203) auf der Basis der Bestimmung der Länge L des kürzesten Wegs umgesetzt wird, die unter Verwendung der folgenden Gleichung bestimmt wird:

$$L = \min(d(C,Cm + d(Cm,A), d(C,Cn) + d(Cn,A))$$

wobei:

min(x,y) eine Funktion darstellt, deren Ergebnis das Minimum zwischen zwei positiven reellen Zahlen x und y ist, d(E,F) den euklidischen Abstand zwischen zwei Punkten E und F darstellt.

6. Verfahren nach den Ansprüchen 3 und 4, **dadurch gekennzeichnet, dass** die Heuristik (203) auf der Basis der Bestimmung der Länge L des kürzesten Wegs umgesetzt wird, die unter Verwendung der folgenden Gleichung bestimmt wird:

$$L = \min\{d(C,Cm) + d(Cm,A), d(C,Cn) + d(Cn,A)\}/V\max$$

wobei:

Vmax für einen bestimmten Fahrzeugtyp die maximale Geschwindigkeit darstellt, mit der dieses imstande ist, sich zu verlagern, unter Berücksichtigung der Gesamtheit des Geländes, auf dem die Streckenplanung durchgeführt wird.

7. Verfahren nach einem der Ansprüche 5 oder 6, **dadurch gekennzeichnet, dass** ein Umgehungspunkt aus Cn und Cm ausgewählt (202) wird, um die Länge L zu minimieren.

8. Verfahren nach einem der vorangehenden Ansprüche, **dadurch gekennzeichnet, dass** die Bestimmung der konvexen Hüllen der Hindernisse vor der Durchführung des Verfahrens oder während dem Hindernisdetektionstest (201) erfolgt.

9. Verfahren nach einem der vorangehenden Ansprüche, **dadurch gekennzeichnet, dass**, wenn es kein Hindernis zu umgehen gibt, die Schätzung des Wegs zwischen C und A eine Heuristik verwendet, die sich auf den euklidischen Abstand d(C,A) stützt.

10. Verfahren nach einem der vorangehenden Ansprüche, **dadurch gekennzeichnet, dass**, wenn mehrere Hindernisse beim Test der gegenseitigen Sichtbarkeit (201) ermittelt wurden, die Bestimmung der Umgehungspunkte bei Auswahl eines einzigen Hindernisses erfolgt.

**11.** Verfahren nach einem der vorangehenden Ansprüche, **dadurch gekennzeichnet, dass**, wenn mehrere Hindernisse beim Test der gegenseitigen Sichtbarkeit (201) ermittelt wurden, die Bestimmung der Umgehungspunkte durch aufeinanderfolgende Auswahl mehrerer Hindernisses erfolgt.

**12.** Verfahren nach einem der Ansprüche 10 oder 11, **dadurch gekennzeichnet, dass** ein Hindernis aus den überschneidenden Hindernissen ausgewählt wird, wenn seine konvexe Hülle den größten Öffnungswinkel aufweist, wobei der Öffnungswinkel dem Winkel entspricht, der von den zwei Segmenten realisiert ist, die den laufenden Punkt C mit den zwei Umgehungspunkten, die zur konvexen Hülle jedes Hindernisses gehören, verbinden.

**13.** Verfahren nach einem der Ansprüche 10 oder 11, **dadurch gekennzeichnet, dass** ein Hindernis aus den überschneidenden Hindernissen ausgewählt wird, wenn seine konvexe Hülle zum laufenden Punkt C am nächsten ist.

**14.** Verfahren nach einem der Ansprüche 10 oder 11, **dadurch gekennzeichnet, dass** ein Hindernis aus den überschneidenden Hindernissen ausgewählt wird, wenn die Fläche seiner konvexen Hülle die größte ist.

**15.** Verfahren nach einem der vorangehenden Ansprüche, **dadurch gekennzeichnet, dass** es einen Schritt umfasst, der mögliche heuristische Wege bestimmt, die die konvexen Hüllen der Hindernisse der zu untersuchenden Zone umgehen, und danach den auswählt, der den kürzesten Abstand zwischen dem laufenden Knoten C und dem Zielknoten A aufweist.

**16.** Navigationsvorrichtung, **dadurch gekennzeichnet, dass** sie das Verfahren nach einem der vorangehenden Ansprüche umsetzt.

**Claims**

**1.** A process for searching for the shortest path for planning a route between a current node C and an arrival node A belonging to a graph of elementary movements, said process being **characterised in that** it comprises at least the following steps:

a test (201) to check whether the node C is in direct visibility with the node A or whether at least one obstacle (300, 301) opposes this;
determining a set of at least one point for bypassing said obstacle preventing direct visibility (202), said obstacle being represented by its convex envelope (302, 303), said bypass point or points being chosen from the nodes Ci corresponding to the ends of the segments that make up the convex envelope of said obstacle as a function of the value of the angles $\theta i = (CA, CCi)$ formed by the segments [CA] (402) and [CCi] (401), and selecting at least one point from this set;
searching for the shortest path between the node C and the selected bypass point and then between the bypass point and the node A by applying a heuristic function (203).

**2.** The process according to the preceding claim, **characterised in that** an obstacle is considered to prevent direct visibility between points C and A if said obstacle intersects the segment defined by these two nodes.

**3.** The process according to any of the preceding claims, **characterised in that** a bypass point Cm is determined such that the angle $\theta m = (CA, CCm)$ is negative and of maximum absolute value from all of the possible negative angles $\theta i$.

**4.** The process according to any of the preceding claims, **characterised in that** a bypass point Cn is determined such that the value of the angle $\theta n = (CA, CCn)$ is positive and of maximum absolute value from all of the possible positive angles $\theta i$.

**5.** The process according to claims 3 and 4, **characterised in that** the heuristic (203) is applied on the basis of the determination of the length L of the shortest path determined using the following expression:

$$L = \min(d(C,Cm)+d(Cm,A),\ d(C,Cn)+d(Cn,A))$$

wherein:

min(x,y) represents a function the result of which is the minimum between two positive real numbers x and y; d(E,F) represents the Euclidean distance between two points E and F.

6. The process according to claims 3 and 4, **characterised in that** the heuristic (203) is applied on the basis of the determination of the length L of the shortest path determined using the following expression:

$$L = \min\{d(C,Cm)+d(Cm,A),\ d(C,Cn)+d(Cn,A)\}/Vmax$$

wherein:

Vmax represents for a designated type of vehicle the maximum speed at which the latter is likely to move, in consideration of all of the terrain over which the route plan is made.

7. The process according to either of claims 5 or 6, **characterised in that** a bypass point is selected (202) from Cn and Cm such as to minimise the length L.

8. The process according to any of the preceding claims, **characterised in that** the convex envelopes of the obstacles are determined prior to execution of the process or during the obstacle detection test (201).

9. The process according to any of the preceding claims, **characterised in that** when there is no obstacle to bypass, the estimation of the path between C and A uses a heuristic on the basis of the Euclidean distance d(C,A).

10. The process according to any of the preceding claims, **characterised in that** if a number of obstacles have been detected during the intervisibility test (201), the bypass points are determined by selecting a single obstacle.

11. The process according to any of the preceding claims, **characterised in that** if a number of obstacles have been detected during the intervisibility test (201), the bypass points are determined by selecting a number of obstacles successively.

12. The process according to either of claims 10 or 11, **characterised in that** an obstacle is selected from the intersecting obstacles if its convex envelope has the largest opening angle, the opening angle corresponding to the angle made by the two segments linking the current point C to the two bypass points belonging to the convex envelope of each obstacle.

13. The process according to either of claims 10 or 11, **characterised in that** an obstacle is selected from the intersecting obstacles if its convex envelope is closest to the current point C.

14. The process according to either of claims 10 or 11, **characterised in that** an obstacle is selected from the intersecting obstacles if the surface of its convex envelope is the largest.

15. The process according to any of the preceding claims, **characterised in that** it comprises a step determining the possible heuristic paths bypassing the convex envelopes of the obstacles of the zone to be explored, and then selecting the one that has the shortest distance between the current node C and the destination node A.

16. A navigation device, **characterised in that** it implements the process according to any of the preceding claims.

FIG.1

```
┌─┬─────────────────┬─┐
│ │      DEBUT      │ │
└─┴─────────────────┴─┘
          │
          ▼
┌───────────────────────┐
│                       │        201
│      DETECTION        │       ╱
│      OBSTACLE         │      ∫
│                       │
└───────────────────────┘
          │
          ▼
┌───────────────────────┐
│                       │        202
│      POINT DE         │       ╱
│    CONTOURNEMENT      │      ∫
│                       │
└───────────────────────┘
          │
          ▼
┌───────────────────────┐
│                       │        203
│      RECHERCHE        │       ╱
│     DE CHEMIN         │      ∫
│     HEURISTIQUE       │
└───────────────────────┘
          │
          ▼
┌─┬─────────────────┬─┐
│ │       FIN       │ │
└─┴─────────────────┴─┘
```

# FIG.2

FIG.3

FIG.4

FIG.5a

FIG.5b

FIG.5c

FIG.6

FIG.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 200608996 A

**Littérature non-brevet citée dans la description**

- **P.E. HAART ; N.J. NILSSON ; B. RAPHALE.** A Formal Basis for the Heuristic Determination of Minimum Cost Paths. *IEEE transactions of Systems Science and Cybernetics,* Juillet 1968, vol. 4 (2), 100-107